(19) Europäisches Patentamt
European Patent Office
Office européen des brevets

(11) Veröffentlichungsnummer: **0 001 753**
**B1**

(12) **EUROPÄISCHE PATENTSCHRIFT**

(21) Anmeldenummer: 78101015.2

(22) Anmeldetag: 28.09.78

(51) Int. Cl.³: C 07 F 9/40, C 07 F 9/165, C 07 F 9/24, C 07 F 9/65, A 01 N 57/10, A 01 N 57/18

(54) **Thiophosphor(phosphon)-säureester, Verfahren zu ihrer Herstellung und Verwendung als Schädlingsbekämpfungsmittel**

(30) Priorität: 13.10.77 DE 2746057

(43) Veröffentlichungstag der Anmeldung:
16.05.79 Patentblatt 79/10

(45) Bekanntmachung des Hinweises auf die Patenterteilung:
10.12.80 Patentblatt 80/25

(84) Benannte Vertragsstaaten:
BE CH DE FR GB LU NL SE

(56) Entgegenhaltungen:
DE - A - 2 249 939
CH - A - 506 564
CH - A - 401 968

(73) Patentinhaber: BASF Aktiengesellschaft
Carl-Bosch-Strasse 38
D - 6700 Ludwigshafen (DE)

(72) Erfinder: Kiehs, Karl, Dr.
Sudetenstrasse 22
D - 6840 Lampertheim (DE)
Adolphi, Heinrich, Dr.
Kalmitweg 11
D - 6703 Limburgerhof (DE)

EP 0 001 753 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Thiophosphor(phosphon)-säureester, Verfahren zu ihrer Herstellung und Verwendung als Schädlingsbekämpfungsmittel

Die vorliegende Erfindung betrifft neue Phosphor(phosphon)-säureester, Schädlingsbekämpfungsmittel, die diese Verbindungen als Wirkstoffe enthalten, sowie ein Verfahren zur Herstellung dieser Verbindungen.

S-Phosphoryl(phosphonyl)-thiolglykolsäureamidine sind aus der DE-OS 2 249 939 bekannt. Sie eignen sich zur Bekämpfung von Schädlingen aus der Klasse der Insekten und Spinnentiere.

Es wurde gefunden, daß Phosphor(phosphon)-säureester der Formel I

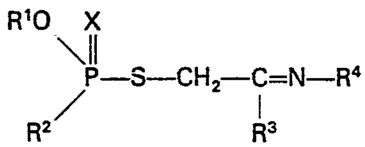

I,

in der

$R^1$ unverzweigte oder verzweigte Alkylreste mit bis zu 4 Kohlenstoffatomen,

$R^2$ unverzweigte oder verzweigte Alkylreste, Alkoxyreste oder Alkylthioreste mit jeweils bis zu 4 Kohlenstoffatomen, Mono- oder Dialkylaminoreste mit bis zu 4 Kohlenstoffatomen in einer Alkylgruppe oder Phenyl,

$R^3$ unverzweigte oder verzweigte Alkoxy- oder Alkylthioreste mit bis zu 4 Kohlenstoffatomen, die Aminogruppe, Mono- oder Dialkylaminoreste mit bis zu 4 Kohlenstoffatomen in einer Alkylgruppe, Alkyl-alkoxyalkylaminoreste mit bis zu 4 Kohlenstoffatomen in einer Alkyl- oder Alkoxyalkylgruppe, Dialkoxyalkylaminoreste mit bis zu 4 Kohlenstoffatomen in einer Alkoxyalkylgruppe, Alkyl-alkenylaminoreste mit bis zu 4 Kohlenstoffatomen in einer Alkyl- oder Alkenylgruppe, Alkyl-alkinylaminoreste mit bis zu 4 Kohlenstoffatomen in einer Alkyl- oder Alkinylgruppe, den N-Methyl-N-methoxy-aminorest, den N-(2-Methoxyäthyl)-N-(2-cyanoäthyl)-rest, einen stickstoffhaltigen heterocyclischen Ring mit 5 bis 7 Ringgliedern, der mehrere Stickstoffatome und gegebenenfalls Sauerstoff als Ringglieder enthalten kann,

$R^4$ gegebenenfalls durch Halogen substituierte Acylreste mit bis zu 4 Kohlenstoffatomen, Alkylsulfonyl- oder Halogenalkylsulfonylreste mit bis zu 4 Kohlenstoffatomen in der Alkyl- oder Halogenalkylgruppe, die Gruppe $-CO-NR^5R^6$, wobei $R^5$ und $R^6$ für Wasserstoff, unverzweigtes oder verzweigtes Alkyl mit bis zu 4 Kohlenstoffatomen oder Phenyl steht, mit der Maßgabe, daß $R^5$ und $R^6$ nicht gleichzeitig Phenyl sind, oder wobei $R^5$ und $R^6$ zusammen mit dem Stickstoffatom, dessen Substituenten sie sind, einen 5- oder 6-gliedrigen heterocyclischen Ring mit weiteren Stickstoffatomen und einem Sauerstoffatom als Ringglieder bilden können, oder die Gruppe $-CO-Y-R^7$, wobei $R^7$ unverzweigtes oder verzweigtes Alkyl mit bis zu 4 Kohlenstoffatomen, Phenyl oder Benzyl und Y für Sauerstoff oder Schwefel stehen, und

X Sauerstoff oder Schwefel bedeuten,

sich zur Bekämpfung von Schädlingen, wie Insekten, Milben und Zecken, eignen und dabei in ihrer Wirkung zum Stand der Technik gehörenden Phosphor(phosphon)-säureestern überlegen sind.

Unverzweigte oder verzweigte Alkylreste für $R^1$ und $R^2$ sind beispielsweise Methyl, Äthyl, n-Propyl, i-Propyl, n-Butyl, i-Butyl, sec.-Butyl, vorzugsweise Methyl und Äthyl; Alkoxyreste für $R^2$ und $R^3$ sind beispielsweise Methoxy, Äthoxy, n-Propoxy, i-Propxoy, n-Butoxy, sec.-Butoxy, vorzugsweise Methoxy, Äthoxy, n-Propoxy und i-Propoxy; Alkylthioreste für $R^2$ und $R^3$ sind beispielsweise Methylthio, Äthylthio, n-Propylthio, i-Propylthio, n-Butylthio, i-Butylthio, sec.-Butylthio, vorzugsweise Methylthio, Äthylthio, n-Propylthio und i-Propylthio; Alkyl- oder Dialkylaminoreste für $R^2$ und $R^3$ sind Methylamino, Äthylamino, n-Propylamino, i-Propylamino, n-Butylamino, i-Butylamino, sec.-Butylamino, Dimethylamino, Diäthylamino, Di-n-propylamino, Di-i-propylamino, Methyläthylamino, Methyl-n-propylamino, Methyl-i-propylamino, Äthyl-n-propylamino, vorzugsweise Methylamino, Dimethylamino, Äthylamino, Diäthylamino, i-Propylamino, Methyl-i-propylamino, Di-n-Propylamino, Di-i-propylamino; Alkyl-alkoxyalkylaminoreste oder Dialkoxyalkylaminoreste für $R^3$ sind beispielsweise Methylmethoxyäthylamino, Äthyl-methoxyäthylamino, Äthylmethoxyäthylamino, Äthyläthoxyäthylamino, Bis-methoxyäthylamino, Bis-äthoxyäthylamino, vorzugsweise Bis-methoxyäthylamino, Methyl-methoxyäthylamino, Äthyl-methoxyäthylamino; Alkyl-alkenylamino- und Alkyl-alkinylaminoreste für $R^3$ sind beispielsweise Methylallylamino, Äthyl-allylamino, Methyl-propargylamino, Äthylpropargylamino, n-Propyl-allylamino, i-Propyl-allylamino, i-Propyl-propargylamino, n-Propyl-propargylamino, vorzugsweise Methylallylamino und Methyl-propargylamino; als stickstoffhaltige heterocyclische Ringe für $R^3$ kommen Pyrrolidin, Piperidin, Morpholin, Hexamethylenimin, Imidazol, Pyrazol, 1,2,4-Triazol und 1,3,4-Triazol in Betracht; gegebenenfalls durch Halogen substituierte Acylreste für $R^4$ sind durch Chlor oder Brom substituiertes Acetyl oder Propionyl, wie Chloracetyl, Dichloracetyl, Trichloracetyl, Bromacetyl, $\alpha$-Chlorpropionyl, vorzugsweise Acetyl und durch Chlor substituierte Acetylreste, Alkylsulfonyl oder Halogenalkylsulfonylreste für $R^4$ sind Methylsulfonyl, Äthylsulfonyl, n-Propylsulfonyl, i-Propylsulfonyl, n-Butylsulfonyl, i-Butylsulfonyl, sec.-Butylsulfonyl, Chlormethylsulfonyl, vorzugsweise Methylsulfonyl und

Chlormethylsulfonyl; Carbamoylreste für $R^4$ sind beispielsweise N-Methylcarbamoyl, N-N, Dimethylcarbamoyl, N-Äthylcarbamoyl, N,N-Diäthylcarbamoyl, N-Phenylcarbamoyl, N-Alkyl-N-phenylcarbamoyl oder Reste der Formel —CO—$NR^5R^6$, bei denen $R^5$ und $R^6$ zusammen mit den Stickstoffatomen, dessen Substituenten sie sind, einen Pyrrolidin-, Morpholin-, Piperidin-, Imidazol-, Pyrazol- oder Triazolring bilden; Alkoxycarbonylreste oder Alkylmercaptocarbonylreste für $R^4$ sind beispielsweise Methoxycarbonyl, Äthoxycarbonyl, n-Propoxycarbonyl, Isopropoxycarbonyl, sec.-Butoxycarbonyl, Methylmercaptocarbonyl, Äthylmercaptocarbonyl, n-Propylmercaptocarbonyl, i-Propylmercaptocarbonyl, sec.-Butylmercaptocarbonyl.

Bevorzugte Phosphor(phosphon)-säureester der Formel I sind solche, bei denen $R^1$ Äthyl, $R^2$ Äthoxy oder n-Propylthio, $R^3$ Mono- oder Dialkylamino mit bis zu 4 Kohlenstoffatomen in einer Alkylgruppe, Alkyl-alkenylamino mit bis zu 4 Kohlenstoffatomen in einer Alkyl- oder Alkenylgruppe, Alkylalkinylamino mit bis zu 4 Kohlenstoffatomen in einer Alkyl oder Alkinylgruppe oder Morpholinyl, $R^4$ Methylsulfonyl, Chlormethylsulfonyl oder Methoxycarbonyl und X Sauerstoff oder Schwefel bedeuten.

Gegenstand der Erfindung ist weiterhin ein Verfahren zur Herstellung der neuen Phosphor(phosphon)-säureester der Formel I, das dadurch gekennzeichnet ist, daß man Verbindungen der Formel II

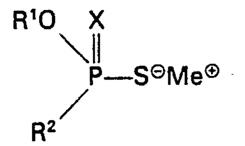

II

mit Verbindungen der Formel III

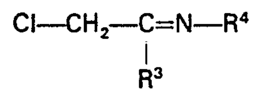

III

bei Temperaturen im Bereich zwischen 0 und 150°C in Gegenwart eines Lösungsmittels umsetzt.

Dabei haben die Reste $R^1$, $R^2$, $R^3$, $R^4$ und X die oben angegebenen Bedeutungen. Me steht für ein anorganisches oder organisches Kationäquivalent, beispielsweise ein Alkaliion, wie Natrium oder Kalium, ein Äquivalent Erdalkaliion, wie Calcium oder Magnesium, oder ein gegebenenfalls substituiertes Ammoniumion, wie Alkylammonium, Dialkylammonium oder Trialkylammonium.

Die Umsetzung wird in gegenüber den Reaktionsteilnehmern inerten Verdünnungsmitteln durchgeführt. Hierfür sind beispielsweise geeignet: Wasser; Äther, wie Tetrahydrofuran, Dioxan, Diisopropyläther, Diäthyläther, Diglykoldimethyläther; Ketone, wie Aceton, Methyläthylketon, Diäthylketon; aromatische Kohlenwasserstoffe, wie Toluol, Nitrobenzol, Xylole und Chlorbenzole; Nitrile, wie Acetonitril; chlorierte aliphatische Kohlenwasserstoffe, wie Methylenchlorid, Äthylenchlorid, Chloroform; Dimethylformamid, Dimethylsulfoxid. Auch Gemische dieser Verdünnungsmittel können werdendet werden.

Die Reaktionstemperatur kann innerhalb eines größeren Bereiches variiert werden. Im allgemeinen arbeitet man bei Temperaturen im Bereich von 0 bis 150°C, vorzugsweise im Bereich von 25 bis 60°C.

Zur Durchführung des Verfahrens setzt man die Ausgangsstoffe meist in äquimolaren Verhältnissen ein. Ein Überschuß der einen oder anderen Reaktionskomponente stört nicht. Die Endprodukte fallen in Form von Ölen an, die nach längerem Stehen kristallisieren. Zu ihrer Charakterisierung dienen Brechungsindex bzw. Schmelzpunkt.

Phosphorylierungskomponenten der Formel II sind beispielsweise Ammonium-O,O-dimethylthiophosphat, Ammonium-O,O-dimethyl-dithiophosphat, Ammonium-O,O-diäthyl-thiophosphat, Ammonium-O,O-diäthyldithiophosphat, Ammonium-O,O-diisopropyl-thiophosphat, Ammonium-O,O-diisopropyl-dithiophosphat und die entsprechenden Natrium-, Kalium-, Calcium-, Dimethylammoniumsalze.

Die als Ausgangsstoffe verwendeten Verbindungen der Formel III können in an sich bekannter Weise durch Umsetzen von Chloracetonitril mit Alkoholen, Mercaptanen oder Aminen der Formel $R^3H$, in der $R^3$ die obengenannten Bedeutungen hat, und Chlorwasserstoff und durch Umsetzen des so erhaltenen Chloracetiminoesterhydrochlorids mit einem Acylchlorid, Carbamoylchlorid oder einem Sulfochlorid der Formel $R^4Cl$, in der $R^4$ die oben genannten Bedeutungen hat, entsprechend folgenden Reaktionsgleichungen erhalten werden:

a)

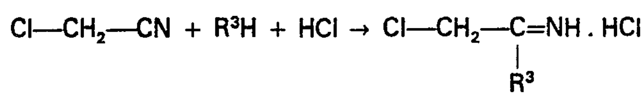

b) 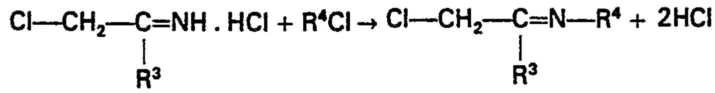

III

Die Umsetzung entsprechend Gleichung a) verläuft bei Raumtemperatur in Gegenwart eines inerten organischen Verdünnungsmittels. Geeignete Verdünnungsmittel sind die für die Umsetzung der Verbindungen der Formel III mit den Salzen des (Di)thiophosphates der Formel II in Betracht kommenden Verdünnungsmittel mit Ausnahme der Ketone und Nitrile.

Die Umsetzung entsprechend Gleichung b) wird in den für die Umsetzung entsprechend Gleichung a) geeigneten indifferenten organischen Verdünnungsmitteln in Gegenwart einer organischen Base, beispielsweise eines Trialkylamins, wie Triäthylamin, eines Dialkylanilins, wie N,N-Dimethylanilin, N,N-Diäthylanilin, oder eines heterocyclischen Amins, wie Pyridin oder Chinolin, durchgeführt. Die Umsetzung läuft ebenfalls in einem zweiphasigen System, bestehend aus Wasser und einem mit Wasser nicht mischbaren Lösungsmittel in Anwesenheit einer der genannten organischen Basen oder einer anorganischen Base, beispielsweise eines Alkalihydroxids, wie Natriumhydroxid, Kaliumhydroxid, eines Alkalicarbonats, wie Natriumcarbonat, Kaliumcarbonat, oder eines Alkalihydrogencarbonats, wie Natriumhydrogencarbonat, Kaliumhydrogencarbonat, ab.

Die Reaktionstemperaturen können im Bereich zwischen —40 und +100°C liegen; vorzugsweise arbeitet man bei einer Temperatur im Bereich zwischen —20 und +50°C.

Bei den Umsetzungen entsprechend Gleichung a) sowie Gleichung b) können die Reakationspartner in äquimolaren Verhältnis eingesetzt werden; zweckmäßigerweise verwendet man aber die billigere Reaktionskomponente in geringem Überschuß.

Die nach Gleichung a) und b) hergestellten Produkte müssen nicht isoliert werden, sondern können im Eintopfverfahren zu den Endprodukten der Formel I umgesetzt werden.

Die folgenden Beispiele erläutern die Herstellung der Ausgangsprodukte der Formel III.

Beispiel 1

150 g Chloracetonitril und 65 g absolutes Methanol werden mit 300 ml absolutem Diäthyläther verdünnt und anschließend bei Raumtemperatur mit trockenem Chlorwasserstoff begast; nach dem Abdestillieren des Lösungsmittels erhält man 282 g der Verbindung

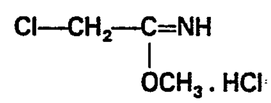

mit einem Schmelzpunkt von 78—80°C.

Beispiel 2

152 g Isopropylmercaptan und 150 g Chloracetonitril werden in 1 000 ml trockenem Methylenchlorid gelöst und bei 20 bis 30°C mit trockenem Chlorwasserstoff bis zur Sättigung begast. Nach dem Abdestillieren der flüchtigen Anteile erhält man 350 g der Verbindung

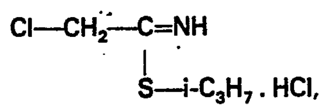

die unter Zersetzung bei 105°C schmilzt.

Beispiel 3

Zu 75,5 g Chloracetonitril, gelöst in 200 ml absolutem Methanol, gibt man bei 0°C 2,2 g Natriummethylat, läßt auf 25°C kommen und rührt 30 Minuten lang. Dann werden 2,4 g Eisessig zugegeben, anschließend trägt man 81,5 g Dimethylamin-hydrochlorid portionsweise ein, läßt die Temperatur auf 50°C kommen und rührt danach weitere 4 Stunden bei 50°C. Nach dem Einengen erhält man 145 g der Verbindung

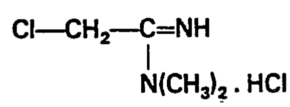

mit einem Schmelzpunkt von 179 bis 181°C.

Beispiel 4

Zu 16 g Natriumhydroxid, gelöst in 150 ml Wasser, und 300 ml Methylenchlorid gibt man bei —10°C bis 0°C 31,4 g N,N-Dimethylchloracetamidin-hydrochlorid und tropft danach binnen 30

Minuten 25,4 g Methansulfochlorid ein. Anschließend wird 30 Minuten lang bei 0°C nachgerührt, dann trennt man die Phasen, wäscht die organische Phase zweimal mit je 100 ml Wasser, trocknet über Natriumsulfat und engt unter Vakuum ein. Man erhält 27,8 g der Verbindung

$$\begin{array}{l} Cl—CH_2—\underset{\displaystyle N(CH_3)_2}{\underset{|}{C}}=N—SO_2—CH_3 \end{array}$$

mit einem Schmelzpunkt von 65 bis 67°C.

Beispiel 5

Analog Beispiel 4 erhält man aus 31,4 g N,N-Dimethylchloracetamidin-hydrochlorid und 17,3 g Acetylchlorid 19 g der Verbindung

$$Cl—CH_2—\underset{\displaystyle N(CH_3)_2}{\underset{|}{C}}=N—CO—CH_3$$

die als gelbliches Öl anfällt, $n_D^{25}$: 1,5190.

Beispiel 6

Analog Beispiel 4 erhält man aus 31,4 g N,N-Dimethylchloracetamidin-hydrochlorid und 31,4 g Chlormethansulfochlorid 40 g der Verbindung

$$Cl—CH_2—\underset{\displaystyle N(CH_3)_2}{\underset{|}{C}}=N—SO_2—CH_2—Cl$$

mit einem Schmelzpunkt von 70 bis 72°C.

Beispiel 7

Zu 75,2 g S-Isopropylchloracetiminthioäther-hydrochlorid, suspendiert in 400 ml Methylenchlorid, gibt man bei –5 bis 0°C 80,8 g Triäthylamin und tropft anschließend 74,7 g Trichloracetylchlorid ein. Danach wird 30 Minuten lang bei Raumtemperatur nachgerührt. Zur Aufarbeitung wird dreimal mit Wasser gewaschen und nach dem Trocknen über Natriumsulfat eingeengt; man erhält 107 g der Verbindung

$$Cl—CH_2—\underset{\displaystyle S\text{-}i\text{-}C_3H_7}{\underset{|}{C}}=N—CO—CCl_3$$

die als ölige Flüssigkeit anfällt; $n_D^{25}$: 1,5435.

Beispiel 8

Analog Beispiel 7 erhält man aus 51,6 g O-Isopropylchloracetiminäther und 35,4 g Methansulfochlorid 40 g der Verbindung

$$Cl—CH_2—\underset{\displaystyle O\text{-}i\text{-}C_3H_7}{\underset{|}{C}}=N—SO_2CH_3 \quad ; \quad n_D^{25}: 1,4670.$$

Die Herstellung der neuen Phosphor(phosphon)-säureester der Formel I wird durch das folgende Beispiel erläutert.

Beispiel 9

Zu 11,2 g Ammonium-O,O-diäthylthiophosphat, gelöst in 75 ml Aceton, tropft man bei 30 bis 40°C eine Lösung von 9,9 g N,N-Dimethyl-N'-methylsulfonyl-chloracetamidin in 50 ml Aceton und rührt anschließend bei 60 bis 70°C 3 bis 4 Stunden lang nach. Das Reaktionsgut wird filtriert, das Filtrat eingeengt; den Rückstand nimmt man mit Methylenchlorid auf, wäscht dreimal mi je 20 ml Wasser, trocknet die organische Phase über Natriumsulfat und destilliert das Lösungsmittel ab.

Man erhält 15 g der Verbindung

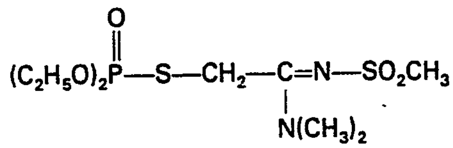

als blaßgelbes Öl, das nach längerem Stehen zu fast farblosen Kristallen vom Schmelzpunkt 55 bis 57°C erstarrt.

Nach dem durch Beispiel 9 erläuterten Verfahren wurden die folgenden Verbindungen der Formel

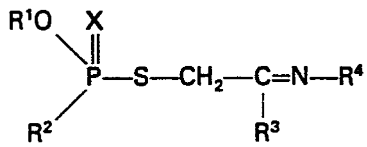

hergestellt.

| Nr. | $R^1$ | $R^2$ | $R^3$ | $R^4$ | X | $n_D^{25}$ (Fp. °C) |
|---|---|---|---|---|---|---|
| 1 | $C_2H_5$ | $C_2H_5O$ | $N(CH_3)_2$ | $SO_2CH_3$ | O | (55 – 57) |
| 2 | $C_2H_5$ | $C_2H_5O$ | $N(CH_3)_2$ | $COCH_3$ | S | 1.5512 |
| 3 | $C_2H_5$ | $C_2H_5O$ | $N(CH_3)_2$ | $COCH_3$ | O | 1.4733 |
| 4 | $C_2H_5$ | $C_2H_5O$ | $N(CH_3)_2$ | $COCHCl_2$ | S | 1.5578 |
| 5 | $C_2H_5$ | $C_2H_5O$ | $N(CH_3)_2$ | $COCHCl_2$ | O | 1.5168 |
| 6 | $C_2H_5$ | $C_2H_5O$ | $N(CH_3)_2$ | $COCCl_3$ | S | 1.5565 |
| 7 | $C_2H_5$ | $C_2H_5O$ | $N(CH_3)_3$ | $COCCl_3$ | O | 1.5322 |
| 8 | $C_2H_5$ | $C_2H_5O$ | 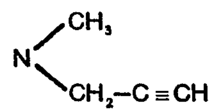 | $SO_2CH_2Cl$ | S | 1.5430 |
| 9 | $C_2H_5$ | $C_2H_5O$ | 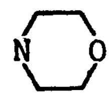 | $SO_2CH_2Cl$ | S | 1.5502 |
| 10 | $C_2H_5$ | $C_2H_5O$ | 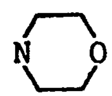 | $SO_2CH_2Cl$ | O | 1.5205 |
| 11 | $C_2H_5$ | $C_2H_5O$ | $N(CH_3)_2$ | $SO_2CH_3$ | S | 1.5310 |
| 12 | $C_2H_5$ | $C_2H_5O$ | $N(CH_3)_2$ | $SO_2CH_2Cl$ | O | (52 – 53) |
| 13 | $C_2H_5$ | $C_2H_5O$ | $N(CH_3)_2$ | $SO_2CH_2Cl$ | S | (68) |
| 14 | $CH_3$ | $N(CH_3)_2$ | $N(CH_3)_2$ | $SO_2CH_2Cl$ | O | 1.5415 |
| 15 | $CH_3$ | $N(CH_3)_2$ | $N(CH_3)_2$ | $COCHCl_2$ | O | 1.5430 |
| 16 | $CH_3$ | $N(CH_3)_2$ | $N(CH_3)_2$ | $COCCl_3$ | O | 1.5520 |

| Nr. | $R^1$ | $R^2$ | $R^3$ | $R^4$ | X | $n_D^{25}$ (Fp. °C) |
|---|---|---|---|---|---|---|
| 17 | $C_2H_5$ | $C_2H_5O$ | $OCH_3$ | $SO_2CH_3$ | S | 1.5400 |
| 18 | $C_2H_5$ | $C_2H_5O$ | i-$C_3H_7$ | $COCCl_3$ | O | 1.4750 |
| 19 | $CH_3$ | $N(CH_3)_2$ | i-$C_3H_7O$ | $COCCl_3$ | O | 1.4875 |
| 20 | $CH_3$ | $CH_3O$ | $N(CH_3)_2$ | $SO_2CH_2Cl$ | O | (58 – 60) |
| 21 | $CH_3$ | $CH_3$ | $N(CH_3)_2$ | $SO_2CH_3$ | S | 1.5690 |
| 22 | $C_2H_5$ | $C_6H_5$ | $N(CH_3)_2$ | $SO_2CH_2Cl$ | S | 1.5992 |
| 23 | $CH_3$ | $CH_3$ | $N(CH_3)_2$ | $COCH_3$ | S | 1.5670 |
| 24 | $CH_3$ | $CH_3O$ | $N(CH_3)_2$ | $COCHCl_2$ | S | 1.5600 |
| 25 | $C_2H_5$ | $C_6H_5$ | $N(CH_3)_2$ | $COCHCl_2$ | S | 1.6025 |
| 26 | $CH_3$ | $CH_3$ | $N(CH_3)_2$ | $COCCl_3$ | S | 1.5193 |
| 27 | $C_2H_5$ | $C_6H_5$ | $N(CH_3)_2$ | $COCCl_3$ | S | 1.5950 |
| 28 | $CH_3$ | $N(CH_3)_2$ | $NH_2$ | $SO_2CH_2Cl$ | O | (66 – 69) |
| 29 | $C_2H_5$ | $C_2H_5-CH(CH_3)-S$ | $N(CH_3)_2$ | $SO_2CH_3$ | O | 1.5448 |
| 30 | $C_2H_5$ | $(CH_3)_2CH-CH_2-S$ | $N(CH_3)_2$ | $SO_2CH_3$ | O | 1.5418 |
| 31 | $C_2H_5$ | $C_2H_5-CH(CH_3)-S$ | $N(CH_3)_2$ | $SO_2CH_2Cl$ | O | 1.5504 |
| 32 | $C_2H_5$ | n-$C_3H_7S$ | $N(CH_3)_2$ | $SO_2CH_3$ | O | 1.5475 |
| 33 | $C_2H_5$ | n-$C_3H_7S$ | $N(CH_3)_2$ | $SO_2CH_2Cl$ | O | 1.5508 |
| 34 | $C_2H_5$ | n-$C_3H_7S$ | $N(CH_3)_2$ | $COCCl_3$ | O | 1.5530 |
| 35 | $C_2H_5$ | n-$C_3H_7S$ | $N(CH_3)_2$ | $COCH_3$ | O | 1.5290 |
| 36 | $C_2H_5$ | n-$C_3H_7S$ | i-$C_3H_7O$ | $COCH_3$ | O | 1.4900 |

| Nr. | $R^1$ | $R^2$ | $R^3$ | $R^4$ | X | $n_D^{25}$ (Fp. °C) |
|---|---|---|---|---|---|---|
| 37 | $C_2H_5$ | n-$C_3H_7S$ | i-$C_3H_7O$ | $COCCl_3$ | O | 1.5070 |
| 38 | $C_2H_5$ | $C_2H_5O$ | $C_2H_5O$ | $COCHCl_2$ | S | 1.5180 |
| 39 | $C_2H_5$ | $C_2H_5O$ | i-$C_3H_7O$ | $COCH_3$ | S | 1.4820 |
| 40 | $C_2H_5$ | $C_2H_5O$ | i-$C_3H_7O$ | $COCCl_3$ | S | 1.5240 |
| 41 | $C_2H_5$ | $C_2H_5O$ | i-$C_3H_7S$ | $COCCl_3$ | S | 1.5450 |
| 42 | $C_2H_5$ | $C_2H_5O$ | i-$C_3H_7S$ | $COCCl_3$ | O | 1.5030 |
| 43 | $C_2H_5$ | $C_2H_5O$ | $CH_3S$ | $COCHCl_2$ | O | 1.5270 |
| 44 | $C_2H_5$ | $C_2H_5O$ | $CH_3S$ | $COCHCl_2$ | S | 1.5450 |
| 45 | $C_2H_5$ | $C_2H_5O$ | $NH_2$ | $SO_2CH_2Cl$ | S | 1.5560 |
| 46 | $C_2H_5$ | $C_2H_5O$ | $NH_2$ | $SO_2CH_2Cl$ | O | 1.5210 |
| 47 | $C_2H_5$ | $C_2H_5O$ | $NH(CH_3)$ | $SO_2CH_2Cl$ | S | (76 – 77) |
| 48 | $C_2H_5$ | $C_2H_5O$ | $NH(CH_3)$ | $SO_2CH_2Cl$ | O | 1.5205 |
| 49 | $C_2H_5$ | $C_2H_5O$ | $N(C_2H_5)_2$ | $SO_2CH_2Cl$ | O | 1.5080 |
| 50 | $C_2H_5$ | $C_2H_5O$ | $N(C_2H_5)_2$ | $SO_2CH_2Cl$ | S | 1.5265 |
| 51 | $C_2H_5$ | $C_2H_5O$ | $CH_3-N-i-C_3H_7$ | $SO_2CH_2Cl$ | O | 1.5018 |
| 52 | $C_2H_5$ | $C_2H_5O$ | $CH_3-N-i-C_3H_7$ | $SO_2CH_2Cl$ | S | 1.5265 |
| 53 | $C_2H_5$ | $C_2H_5O$ | $NH-i-C_3H_7$ | $SO_2CH_2Cl$ | O | 1.5308 |
| 54 | $C_2H_5$ | $C_2H_5O$ | $NH-i-C_3H_7$ | $SO_2CH_2Cl$ | S | 1.4950 |
| 55 | $C_2H_5$ | $C_2H_5O$ | 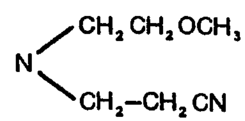 | $SO_2CH_2Cl$ | S | 1.5270 |

| Nr. | $R^1$ | $R^2$ | $R^3$ | $R^4$ | X | $n_D^{25}$ (Fp. °C) |
|---|---|---|---|---|---|---|
| 56 | $C_2H_5$ | $C_2H_5$ | 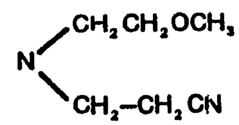 | $SO_2CH_2Cl$ | O | 1.4980 |
| 57 | $C_2H_5$ | $C_2H_5O$ | $N(CH_3)_2$ | $CONHCH_3$ | O | 1.5040 |
| 58 | $C_2H_5$ | $C_2H_5O$ | $N(CH_3)_2$ | $COOCH_3$ | O | 1.5100 |
| 59 | $C_2H_5$ | $C_2H_5O$ | $N(CH_3)_2$ | $CONHCH_3$ | S | 1.5488 |
| 60 | $C_2H_5$ | $C_2H_5O$ | $N(CH_3)_2$ | $COOCH_3$ | S | 1.5425 |
| 61 | $CH_3$ | $CH_3$ | $N(CH_3)_2$ | $COOCH_3$ | S | 1.5695 |
| 62 | $C_2H_5$ | $C_2H_5O$ | $N(CH_3)_2$ | $COSC_2H_5$ | S | 1.5675 |
| 63 | $C_2H_5$ | $C_2H_5O$ | $N(CH_3)_2$ | $COSC_2H_5$ | O | 1.5380 |
| 64 | $CH_3$ | $CH_3$ | $N(CH_3)_2$ | $COSC_2H_5$ | S | 1.5975 |

Die neuen Phosphor(phosphon)-säureester der Formel I eignen sich hervorragend zur Bekämpfung von Schädlingen, insbesondere von Milben und Zecken.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Glysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringespinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarius (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Otiorrhynchus ovatus (Erdbeerwurzelrüßler), Hylobies abietis (Großer brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner);

aus der Ordnung der Zweiflügler (Diptera) beispielsweise Mayetiola destructor (Hessenfliege), Dasyneura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeer-Fruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege);

aus der Ordnung der Hautflügler (Hymenoptera) beispielsweise Athalia rosae (Rübenblattwespe), Haplocampa minuta (Pflaumensägewespe), Monomorium pharaonis (Pharaoameise), Solenopsis geminata (Feuerameise), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monocha (Nonne), Pieris brassicae (Kohlweißling), Aporia crataegi (Baumweißling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agriotes abscurus (Humusschnellkäfer), Agrilus sinuatus (Birnbaum-Prachtkäfer), Meligethes aneneus (Rapsglanzkäfer), Atomaria linearis (Moosknopfkäfer), Epilachna varivestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen) Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Psylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Liniierter Blattrandkäfer), Otiorrhynchus sulcatus (Gefurchter Lappenrüßler), Atta sexdens (Blattschneiderameise);

aus der Ordnung der Wanzen (Heteroptera) beispielsweise Nezara viridula (Grüne Reiswanze), Eurygaster integriceps (Asiatische Getreidewanze), Blissus leucopterus (Chinch bug.), Dysdercus cingulatus (Kapok-Wanze), Piesma quadrata (Rübenwanze), Lygus pratensis (Gemeine Wiesenwanze);

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nasturtii (Kreuzdornblattlaus), Cerosipha gossypii (Gurkenblattlaus), Sappaphis mali (Rosige Apfellaus), Sappaphis mala (Mehlige Birnblattlaus), Dysaphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschlaus), Dysaulacorthum pseudosolani (Gefleckte Kartoffellaus), Acyrthosiphon onobrychis (Grüne Erbsenlaus), Macrosiphon rosae (Große Rosenblattlaus), Megoura viciae

(Wickellaus), Schizoneura lanuginosa (Birnenblutlaus), Eriosoma lanigerum (Blutlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus);

aus der Ordnung der Termiten (Isoptera) beispielsweise Reticulitermes lucifugus.

Zu der Klasse der Arachnoidea gehörende Milben und Zecken (Acarina) sind beispielsweise Tetranychus urticae, Tetranychus atlanticus, Tetranychus pacificus, Paratetranychus pilosus, Bryobia praetiosa, Ixodes ricinus (Holzbock), Ornithodorus moubata, Ablyomma americanum, Dermacentor silvarum, Boophilus microplus.

Die erfindungsgemäßen Verbindungen können mit Erfolg im Pflanzenschutz sowie auf dem Hygiene-, Vorratsschutz- und Veterinärsektor als Schädlingsbekämpfungsmittel umgesetzt werden.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoff, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Oldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

An oberflächenaktiven Stoffen sind zu nennen:

Alkali-, Erdalkali-, Ammoniumsalze von Ligninsulfonsäure, Naphthalinsulfonsäure, Phenolsulfonsäuren, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylencotylphenoläther, äthoxyliertes Isooctylphenol, Octylphenol, Nonylphenon, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Tono Dolomit, Diatomeenerde, Kalzium- und Magnesiumsulfat, Magnesiumoxid, gemahlene Kunststoffe Düngemittel, wie z.B. Ammoniumsulfat, Ammoniumphosphat, Ammoniumnitrat, Harnstoff und pflanzliche Produkte, wie Getreidemehle, Baumrinden-, Holz- und Nußschalenmehl, Cellulosepulver und andere feste Trägerstoffe.

Die Formulierungen enthalten im allgemeinen zwischen 0,1 und 95 Gewichtsprozent Wirkstoff, vorzugsweise zwischen 0,5 und 90 Gewichtsprozent.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gewichtsprozent Wirkstoff oder sogar den 100-prozentigen Wirkstoff allein aufzubringen.

Beispiele für Formulierungen sind:

I. 250 g Wirkstoff Nr. 1
30 g Calcium-Dodecylbenzolsulfonat
70 g oxäthyliertes Rizinusöl
150 g N-Methylpyrrolidon
ad 1 000 ml Xylol

II. 250 g Wirkstoff Nr. 14
10 g Calcium-Dodecylbenzolsulfonat
90 g oxäthyliertes Rizinusöl
ad 1 000 ml Cyclohexanon

III. 3 Gewichtsteile Wirkstoff Nr. 32 werden mit 97 Gewichtsteilen feinteiligem Kaolin innig vermischt. Man erhält auf diese Weise ein Stäubemittel, das 3 Gew.% des Wirkstoffs enthält.

IV. 30 Gewichtsteile Wirkstoff Nr. 58 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Zu den Mischungen oder Einzelwirkstoffen können Öle verschieaenen Typs, Herbizide, Fungizide, Insektizide, Bakterizide, gegebenenfalls auch erst unmittelbar vor der Anwendung (Tankmix), zugesetzt werden. Diese Mittel können zu den erfindungsgemäßen Wirkstoffen im Gewichtsverhältnis 1:10 bis 10:1 zugemischt werden.

Beispielsweise können folgende Mittel zugemischt werden: 1,2 - Dibrom - 3 - chlorpropan, 1,3 - Dichlorpropen, 1,3 - Dichlorpropen + 1,2 - Dichlorpropan, 1,2 - Dibrom - äthyn, 2 - sec - Butylphenyl - N - methylcarbamat,. o - Chlorphenyl - N - methylcarbamat, 3 - Isopropyl - 5 - methyl - phenyl - N - methylcarbamat, o - Isopropoxyphenyl - N - methyl - carbamat, 3,5 - Dimethyl - 4 - methylmercapto - phenyl - N - methylcarbamat, 4 - Dimethylamino - 3,5 - xylyl - N - methylcarbamat, 2 - (1,3 - Dioxolan - 2 - yl) - phenyl - N - methylcarbamat, 1 - Naphthal - N - methylcarbamat, 2,3 - Dihydro - 2,2 - dimethyl - benzofuran - 7 - yl - N - methylcarbamat, 2,2 - Dimethyl - 1,3 - benzodioxol - 4 - yl - N - methylcarbamt, 2 - Dimethylamino - 5,6 - dimethyl - 4 - pyrimidinyl - dimethylcarbamt, 2 - Methyl - 2 - (methylthio) - propionaldehyd - O - (methylcarbamoyl) - oxim, S - Methyl - N - [(methylcarbamoyl)oxy] - thio - acetimidat, Methyl - N',N' - dimethyl - N - [(methylcarbamoyl)oxy - ] - 1 - thiooxamidat, N - (2 - Methyl - 4 - chlor - phenyl) - N',N' - dimethyl - formamidin, Tetrachlorthiophen, O,O - Dimethyl - O - (p - nitrophenyl) - phosphorthioat, O,O - Diäthyl - O - (p - nitrophenyl) - phosphorthioat, O - Äthyl - O - (p - nitrophenyl) - phenyl - phosphonothioat, O,O - Dimethyl - O - (3 - methyl - 4 - nitrophenyl) - phosphorthioat, O,O - Diäthyl - O - (2,4 - dichlorphenyl) - phosphorthioat, O - Äthyl - O - (2,4 - dichlorphenyl) - phenyl - phosphonothioat, O,O - Dimethyl - O - (2,4,5 - trichlorphenyl - ) - phosphorthioat, O - Äthyl - O - (2,4,5 - trichlorphenyl) - äthyl - phosphonothioat, O,O - Dimethyl - O - (4 - brom - 2,5 - dichlorphenyl) - phosphorthioat, O,O - Dimethyl - O - (2,5 - dichlor - 4 - jodphenyl) - phosphorthioat, O,O - Dimethyl - O - (3 - methyl - 4 - methylthiophenyl) - phosphorthioat, O - Äthyl - O - (3 - methyl - 4 - methylthiophenyl) - isopropyl - phosphoramidat, O,O - Diäthyl - O - [p - (methylsulfinyl)phenyl] - phosphorthioat, O - Äthyl - S - phenyl - äthyl - phosphordithioat, O,O - Diäthyl - [2 - chlor - 1 - (2,4 - dichlorphenyl) - vinyl] - phosphat, O,O - Dimethyl - [ - 2 - chlor - 1 - (2,4,5 - trichlorphenyl)] - vinyl - phosphat, O,O - Dimethyl - S - (1 - phenyl) - äthyl - acetat - phosphor - dithioat, Bis - (dimethylamino) - fluor - phosphinoxid, Octamethyl - pyrophosphoramid, O,O,O,O - Tetraäthyl - dithio - pyrophosphat, S - Chlormethyl - O,O - diäthyl - phosphordithioat, O - Äthyl - S,S - dipropyl - phosphordithioat, O,O - Dimethyl - O - 2,2 - dichlorvinyl - phosphat, O,O - Dimethyl - 1,2 - dibrom - 2,2 - dichloräthyl - phosphat, O,O - Dimethyl - 2,2,2 - trichlor - 1 - hydroxy - äthylphosphonat, O,O - Dimethyl - S - [1,2 - biscarbäthoxy - äthyl - (1) - ] - phosphordithioat, O,O - Dimethyl - O - (1 - methyl - 2 - carbmethoxy - vinyl) - phosphat, O,O - Dimethyl - S - (N - methylcarbamoyl - methyl) - phosphordithioat, O,O - Dimethyl - S - (N - methylcarbamoyl - methyl) - phosphorthioat, O,O - Dimethyl - S - (N - methoxyäthyl - carbamoyl - methyl) - phosphordithioat, O,O - Dimethyl - S - (N - formyl - N - methyl - carbamoylmethyl - phosphordithioat, O,O - Dimethyl - O - [1 - methyl - 2 - (methyl - carbamoyl) - vinyl] - phosphat, O,O - Dimethyl - O - [(1 - methyl - 2 - dimethylcarbamoyl) - vinyl] - phosphat, O,O - Dimethyl - O - [(1 - methyl - 2 - chlor - 2 - diäthylcarbamoyl) - vinyl] - phosphat, O,O - Diäthyl - S - (äthyl - thio - methyl) - phosphordithioat, O,O - Diäthyl - S - [(p - Chlorphenylthio) - methyl] - phosphordithioat, O,O - Dimethyl - S - (2 - äthylthioäthyl) - phosphorthioat, O,O - Dimethyl - S - (2 - äthylthioäthyl) - phosphordithioat, O,O - Dimethyl - S - (2 - äthylsulphinyläthyl) - phosphorthioat, O,O - Diäthyl - S - (2 - äthylthio - äthyl) - phosphordithioat, O,O - Dimethyl - S - (2 - äthylsulphinyl - äthyl) - phosphorthioat, O,O - Diäthyl - thiophosphoryliminophenylacetonitril, O,O - Diäthyl - S - (2 - chlor - 1 - phthalimidoäthyl) - phosphordithioat, O,O - Diäthyl - S - [6 - chlor - benzoxazolon - (2) - yl(3)] - methyldithiophosphat, O,O - Dimethyl - S - [2 - methoxy - 1,3,4 - thiodiazol - 5 - onyl(4) - methyl] - phosphordithioat, O,O - Diäthyl - O - [3,5,6 - trichlorpyridyl - (2)] - phosphorthioat, O,O - Diäthyl - O - (2 - pyrazinyl) - phosphorthioat, O,O - Diäthyl - O - [2 - isopropyl - 4 - methyl - pyrimidinyl(6)] - phosphorthioat, O,O - Diäthyl - O -

[2 - (diäthylamino) - 6 - methyl - 4 - pyrimidinyl] - thionophosphat, O,O - Dimethyl - S - (4 - oxo - 1,2,3 - benzotriazin - 3 - yl - methyl) - phosphordithioat, O,O - Dimethyl - S[(4,6 - diamino - 1,3,5 - triazin - 2 - yl) - methyl] - phosphordithioat, O,O - Diäthyl - (1 - phenyl - 1,2,4 - triazol - 3 - yl) - thionophosphat, O,S - Dimethyl - phosphor - amido - thioat, O,S - Dimethyl - N - acetylphosphoramidothioat, γ - Hexachlorcyclohexan, 1,1 - Di(p - methoxyphenyl) - 2,2,2 - trichlor - äthan, 6,7,8,9,10,10 - Hexachloro - 1,5,5a,6,9,9a - hexahydro - 6,9 - methano - 2,4,3 - benzodioxa - thiepin - 3 - oxid.

Die folgenden Beispiele belegen die biologische Wirkung. Vergleichsmittel ist O,O - Dimethyl - S - (1,2 - dicarbäthoxyäthyl) - dithiophosphorsäureester (A) (DE - PS 847 897). Die Numerierung der Wirkstoffe entspricht der tabellarischen Aufzählung.

Beispiel A

Kontaktwirkung auf Blattläuse (Aphis fabae); Spritzversuch

Getopfte Bohnenpflanzen (Vicia faba) mit starken Blattlauskolonien werden in der Spritzkammer mit den wäßrigen Wirkstoffaufbereitungen tropfnaß gespritzt.

Die Auswertung erfolgt nach 24 Stunden.

| Wirkstoff Nr. | Mortalitätsrate [%] bei wäßrigen Wirkstoffaufbereitungen mit einer Wirkstoffkonzentration in Gew.% von 0,01 | 0,005 | 0,0025 | 0,001 |
|---|---|---|---|---|
| 1 | 100 | 90 | < 60 | |
| 3 | 100 | 100 | 70 | |
| 5 | 100 | 90 | < 60 | |
| 7 | 100 | 95 | < 60 | |
| 10 | 100 | 100 | 100 | 70 |
| 12 | 100 | 100 | 100 | 100 |
| 13 | 100 | 90 | < 60 | |
| 36 | 100 | 100 | < 60 | |
| 43 | 100 | 100 | 60 | |
| 48 | 100 | 95 | < 60 | |
| 49 | 100 | 95 | < 60 | |
| 58 | 100 | 95 | < 60 | |
| Vergleichsmittel | 100 | 60 | | |

Beispiel B

Systemische Wirkung auf Blattläuse (Aphis fabae); Gießversuch

Bohnenpflanzen, die in Plastiktöpfen von 8 cm Durchmesser, gefüllt mit 300 g Komposterde, stehen und stark mit Blattläusen (Aphis fabae) infiziert sind, werden mit 20 ml wäßriger Aufbereitungen der Wirkstoffe angegossen.

Die Mortalitätsrate wird nach 48 Stunden ermittelt.

| Wirkstoff Nr. | Mortalitätsrate [%] bei wäßrigen Wirkstoffaufbereitungen mit einer Wirkstoffkonzentration in Gew.% von 0,02 | 0,01 | 0,005 |
|---|---|---|---|
| 1 | 100 | 100 | 90 |
| 3 | 100 | 100 | 60 |
| 5 | 100 | 60 | |
| 7 | 100 | 90 | |

| Wirkstoff Nr. | Mortalitätstrate [%] bei wäßrigen Wirkstoffaufbereitungen mit einer Wirkstoffkonzentration in Gew.% von 0,02 | 0,01 | 0,005 |
|---|---|---|---|
| 10 | 100 | 100 | 50 |
| 11 | 100 | 90 | > 50 |
| 12 | 100 | 100 | 90 |
| 45 | 100 | 50 | |
| 49 | 100 | 90 | |
| 57 | 100 | 60 | |
| 58 | 100 | 100 | 90 |
| Vergleichsmittel | unwirksam | | |

Beispiel C

Wirkung auf Spinnmilben (Tetranychus telarius); hochresistenter Stamm

Getopfte Buschbohnen, die das erste Folgeblattpaar entwickelt haben und einen starken Besatz aller Stadien der Spinnmilbe (Tetranychus telarius) tragen, werden in der Spritzkabine mit wäßrigen Wirkstoffaufbereitungen tropfnaß gespritzt.

Die Wirkung wird nach 5 Tagen festgestellt.

| Wirkstoff Nr. | Abtötungsgrad in [%] bei einer Wirkstoffkonzentration in Gewichtsprozenten von 0,02 | 0,01 | 0,005 |
|---|---|---|---|
| 1 | 100 | | |
| 9 | 100 | | |
| 12 | 100 | 90 | |
| 13 | 100 | 100 | 95 |
| 32 | 100 | 95 | |
| 33 | 100 | 90 | |
| Vergleichsmittel | unwirksam | | |

Beispiel D

Fraß- und Kontaktwirkung auf Raupen der Kohlschabe (Plutella maculipennis)

Blätter von jungen Kohlpflanzen werden 3 Sekunden lang in die wäßrige Wirkstoffemulsion getaucht und nach kurzem Abtropfen einen angefeuchteten Filter in eine Petrischale gelegt. Das Blatt wird darauf mit 10 Raupen des 4. Stadiums der Kohlschabe belegt.

Nach 48 Stunden ermittel man die Mortalitätsrate.

| Wirkstoff Nr. | Mortalitätsrate [%] bei Wirkstoffkonzentrationen in Gewichtsprozent von 0,02 | 0,01 | 0,005 |
|---|---|---|---|
| 8 | 100 | 100 | 100 |
| 13 | 100 | 90 | |
| 32 | 100 | 100 | 85 |
| 33 | 100 | 100 | 80 |
| 48 | 100 | 80 | |
| 56 | 100 | 80 | |

Beispiel E

Kontaktwirkung auf Zecken (Ornithodorus moubata)

Geprüft wird mit Zecken im 3. Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zecken beurteilt.

| Wirkstoff Nr. | Mortalitätsrate [%] bei Wirkstoffkonzentrationen in Gewichtsprozenten von 0,02 | 0,01 | 0,005 | 0,0025 |
|---|---|---|---|---|
| 11 | 100 | 80 | | |
| 1 | 100 | 100 | 100 | |
| 13 | 100 | 100 | 100 | |
| 12 | 100 | 40 | | |
| 3 | 100 | 80 | | |
| 6 | 100 | 100 | | |
| 7 | 100 | 80 | | |
| 57 | 100 | 80 | | |
| 46 | 100 | 80 | | |
| 47 | 100 | 100 | 80 | |
| 48 | 100 | 100 | 100 | 100 |
| 50 | 100 | 100 | 100 | 80 |
| 49 | 100 | 100 | 80 | |
| 54 | 100 | 80 | | |
| 52 | 100 | 100 | | |
| 51 | 100 | 100 | | |
| 55 | 100 | 100 | | |
| 56 | 100 | 100 | | |
| 8 | 100 | 100 | | |
| 9 | 100 | 100 | | |
| 10 | 100 | 100 | 100 | |
| 14 | 100 | 80 | | |
| 36 | 100 | 80 | | |
| 43 | 100 | 100 | | |
| Vergleichsmittel | unwirksam | | | |

**Patentansprüche**

1. Phosphor(phosphon)-säureester der Formel I

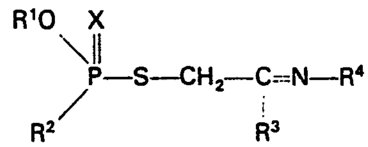

in der

$R^1$ unverzweigte oder verzweigte Alkylreste mit bis zu 4 Kohlenstoffatomen,

$R^2$ unverzweigte oder verzweigte Alkylreste, Alkoxyreste oder Alkylthioreste mit jeweils bis zu 4 Kohlenstoffatomen, Mono- oder Dialkylaminoreste mit bis zu 4 Kohlenstoffatomen in einer Alkylgruppe oder Phenyl,

$R^3$ unverzweigte oder verzweigte Alkoxy- oder Alkylthioreste mit bis zu 4 Kohlenstoffatomen, die Aminogruppe, Mono- oder Dialkylaminoreste mit bis zu 4 Kohlenstoffatomen in einer Alkylgruppe, Alkylalkoxyalkylaminoreste mit bis zu 4 Kohlenstoffatomen in einer Alkyl- oder Alkoxyalkylgruppe, Dialkoxyalkylaminoreste mit bis zu 4 Kohlenstoffatomen in einer Alkoxyalkylgruppe, Alkyl-alkenylaminoreste mit bis zu 4 Kohlenstoffatomen in einer Alkyl- oder Alkenylgruppe, Alkyl-alkinylaminoreste mit bis zu 4 Kohlenstoffatomen in einer Alkyl- oder Alkinylgruppe, den N-Methyl-N-methoxy-aminorest, den N-(2-Methoxyäthyl)-N-(2-cyanoäthyl)-rest, einen stickstoffhaltigen heterocyclischen Ring mit 5 bis 7 Ringgliedern, der mehrere Stickstoffatome und gegebenenfalls Sauerstoff als Ringglieder enthalten kann,

$R^4$ gegebenenfalls durch Halogen substituierte Acylreste mit bis zu 4 Kohlenstoffatomen, Alkylsulfonyl- oder Halogenalkylsulfonylreste mit bis zu 4 Kohlenstoffatomen in der Alkyl- oder Halogenalkylgruppe, die Gruppe —CO—$NR^5R^6$, wobei $R^5$ und $R^6$ für Wasserstoff, unverzweigtes oder verzweigtes Alkyl mit bis zu 4 Kohlenstoffatomen oder Phenyl steht, mit der Maßgabe, daß $R^5$ und $R^6$ nicht gleichzeitig Phenyl sind, oder wobei $R^5$ und $R^6$ zusammen mit dem Stickstoffatom, dessen Substituenten sie sind, einen 5- oder 6-gliedrigen heterocyclischen Ring mit weiteren Stickstoffatomen und einem Sauerstoffatom als Ringglieder bilden können, oder die Gruppe —CO—Y—$R^7$, wobei $R^7$ für unverzweigtes oder verzweigtes Alkyl mit bis zu 4 Kohlenstoffatomen, Phenyl oder Benzyl und Y für Sauerstoff oder Schwefel stehen, und

X Sauerstoff oder Schwefel bedeuten.

2. Phosphor(phosphon)-säureester der Formel I gemäss Anspruch 1, *dadurch gekennzeichnet*, daß $R^1$ Äthyl, $R^2$ Äthoxy oder n-Propylthio, $R^3$ Mono- oder Dialkylamino mit bis zu 4 Kohlenstoffatomen in einer Alkylgruppe, Alkyl-alkenylamino mit bis zu 4 Kohlenstoffatomen in einer Alkyl- oder Alkenylgruppe, Alkyl-alkinylamino mit bis zu 4 Kohlenstoffatomen in einer Alkyl- oder Alkinylgruppe oder Morpholinyl, $R^4$ Methylsulfonyl, Chlormethylsulfonyl oder Methoxycarbonyl und X Sauerstoff oder Schwefel bedeuten.

3. Die Verbindung gemäss Anspruch 1 der Formel

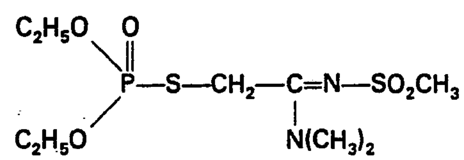

4. Die Verbindung gemäss Anspruch 1 der Formel

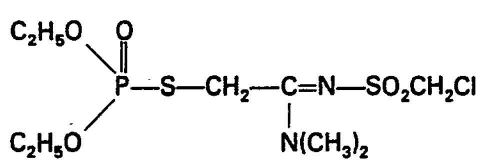

5. Die Verbindung gemäss Anspruch 1 der Formel

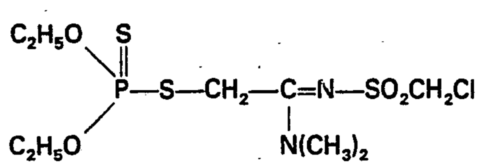

6. Die Verbindung gemäss Anspruch 1 der Formel

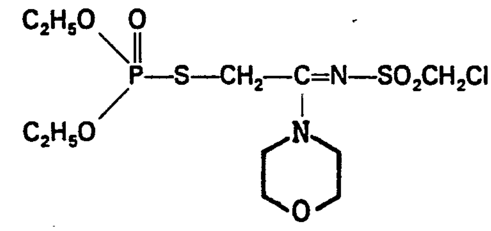

7. Verfahren zur Herstellung von Phosphor(phosphon)-säureestern der Formel I gemäss Anspruch 1, *dadurch gekennzeichnet*, daß man Verbindungen der Formel II

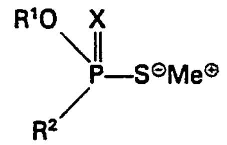 II,

in der $R^1$, $R^2$ und X die obengenannten Bedeutungen haben, und Me ein anorganisches oder organisches Kationäquivalent ist, mit Verbindungen der Formel III

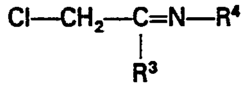 III,

in der $R^3$ und $R^4$ die obengenannten Bedeutungen haben, bei Temperaturen im Bereich zwischen 0 und 150°C in Gegenwart eines Verdünnungsmittels umsetzt.

8. Schädlingsbekämpfungsmittel, enthaltend feste und/oder flüssige Trägerstoffe und Phosphor(phosphon)-säureester der Formel I gemäss Anspruch 1.

9. Verfahren zur Bekämpfung von Schädlingen, *dadurch gekennzeichnet*, daß man Phosphor(phosphon)-säureester der Formel I auf die Schädlinge bzw. deren Lebensraum einwirken läßt gemäss Anspruch 1.

## Claims

1. A phosphoric (phosphonic) acid ester of the formula

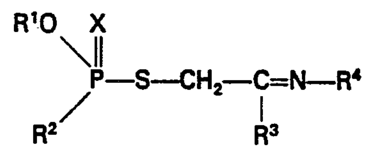 I,

where $R^1$ denotes linear or branched alkyl of up to 4 carbon atoms, $R^2$ denotes linear or branched alkyl, alkoxy or alkylthio, each of up to 4 carbon atoms, mono- or dialkylamino of up to 4 carbon atoms in each alkyl, or phenyl, $R^3$ denotes linear or branched alkoxy or alkylthio of up to 4 carbon atoms, amino, mono- or dialkylamino of up to 4 carbon atoms in each alkyl, alkylalkoxyalkylamino of up to 4 carbon atoms in each alkyl or alkoxyalkyl, dialkoxyalkylamino of up to 4 carbon atoms in each alkoxyalkyl, alkylalkenylamino of up to 4 carbon atoms in each alkyl or alkenyl, alkylalkynylamino of up to 4 carbon atoms in each alkyl or alkynyl, N-methyl-N-methoxyamino, N-(2-methoxyethyl)-N-(2-cyanoethyl), a 5- to 7-membered nitrogenous heterocyclic ring which may contain several nitrogen atoms and optionally oxygen as ring members, $R^4$ denotes unsubstituted or halogen-substituted acyl of up to 4 carbon atoms, alkylsulfonyl or haloalkylsulfonyl of up to 4 carbon atoms in each alkyl or haloalkyl, the group $—CO—NR^5R^6$, $R^5$ and $R^6$ denoting hydrogen, linear or branched alkyl of up to 4 carbon atoms, or—but not simultaneously—phenyl, or $R^5$ and $R^6$ denoting, together with the nitrogen atom whose substituents they are, a 5- or 6-membered heterocyclic ring with futher nitrogen atoms and an oxygen atom as ring members, or $R^4$ denotes the group $—CO—Y—R^7$, $R^7$ denoting linear or branched alkyl of up to 4 carbon atoms, phenyl or benzyl, and Y denoting oxygen or sulfur, and X denotes oxygen or sulfur.

2. A phosphoric (phosphonic) acid ester of the formula I as claimed in claim 1, wherein $R^1$ denotes ethyl, $R^2$ denotes ethoxy or n-propylthio, $R^3$ denotes mono- or dialkylamino of up to 4 carbon atoms in each alkyl, alkylalkenylamino of up to 4 carbon atoms in each alkyl or alkenyl, alkylalkynylamino of up to 4 carbon atoms in each alkyl or alkynyl, or morpholinyl, $R^4$ denotes methylsulfonyl, chloromethylsulfonyl or methoxycarbonyl, and X denotes oxygen or sulfur.

3. The compound as claimed in claim 1 of the formula

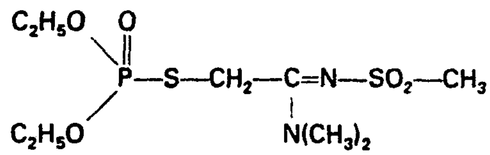

4. The compound as claimed in claim 1 of the formula

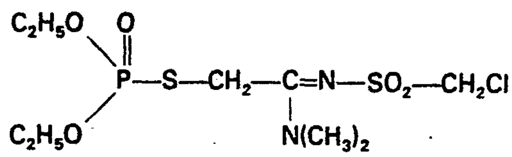

5. The compound as claimed in claim 1 of the formula

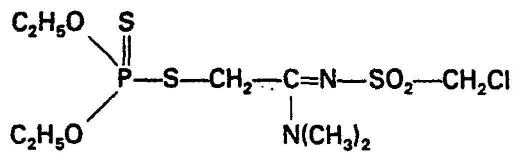

6. The compound as claimed in claim 1 of the formula

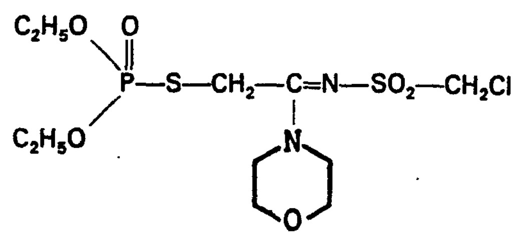

7. A process for the manufacture of a phosphoric (phosphonic) acid ester of the formula I as claimed in claim 1, wherein a compound of the formula II

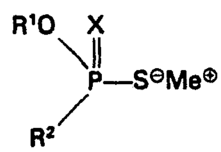

II,

where $R^1$, $R^2$ and X have the meanings given above and Me is an inorganic or organic cation equivalent, is reacted with a compound of the formula III

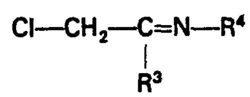

III,

where $R^3$ and $R^4$ have the meanings given above, at from 0 to 150°C in the presence of a diluent.

8. Pesticides comprising a solid and/or liquid carrier and a phosphoric (phosphonic) acid ester of the formula I as claimed in claim 1.

9. A process for combating pests, wherein a phosphoric (phosphonic) acid ester of the formula I as claimed in claim 1 is allowed to act on the pests or their habitat.

**Revendications**

1. Ester d'acide phosphorique ou phosphonique de formule I

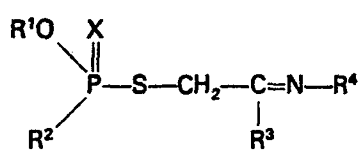

dans laquelle

$R^1$ est un reste alkyle non ramifié ou ramifié en $C_1$ à $C_4$,

$R^2$ est un reste alkyle, alcoxy ou alkylthio non ramifié ou ramifié en $C_1$ à $C_4$, mono- ou dialkylamino (alkyle en $C_1$ à $C_4$) ou phényle,

$R^3$ est un reste alcoxy ou alkylthio non ramifié ou ramifié en $C_1$ à $C_4$, le groupe amino, un reste mono- ou dialkylamino (alkyle en $C_1$ à $C_4$), un reste alkylalcoxyalkylamino (alkyle ou alcoxyalkyle en $C_1$ à $C_4$), un reste dialcoxyalkylamino (alcoxyalkyle en $C_1$ à $C_4$), alkylalcénylamino (alkyle ou alcényle en $C_1$ à $C_4$), alkylacinylamino (alkyle ou alcinyle en $C_1$ à $C_4$), le reste N-Méthyl-N-méthoxy, N-(2-méthoxyéthyl)-N-(2-cyanéthyle), un hétérocycle azoté ayant 5 à éléments, qui peut contenir plusieurs atomes d'azote et éventuellement de l'oxygène dans le cycle.

$R^4$ est un reste acyle en $C_1$ à $C_4$ éventuellement substitué par un halogène, un reste alkylsulfonyle ou halogènealkylsulfonyle (alkyle ou halogène-alkyle en $C_1$ à $C_4$), le groupe —CO—$NR^5R^6$, où $R^5$ et $R^6$ représentent de l'hydrogène, un alkyle non ramifié ou ramifié en $C_1$ à $C_4$ ou un phényle, sous réserve que $R^5$ et $R^6$ ne représentent pas simultanément un phényle, ou bien $R^5$ et $R^6$ peuvent représenter, avec l'atome d'azote sur lequel ils sont fixés, un hétérocycle à 5 ou 6 éléments avec d'autres atomes d'azote et un atome d'oxygène en tant qu'éléments du cycle, ou le groupe —CO—Y—$R^7$, $R^7$ étant un reste alkyle non ramifié ou ramifié en $C_1$ à $C_4$, phényle ou benzyle et Y est de l'oxygène ou du soufre,

et X est de l'oxygène ou du soufre.

2. Ester selon la revendication 1, caractérisé par le fait que $R^1$ est le reste éthyle, $R^2$ le reste' ou n-propylthio, $R^3$ un reste mono- ou dialkylamino (alkyle en $C_1$ à $C_4$), alkyl-alcénylamino (alkyle ou alcényle en $C_1$ à $C_4$), alkyl-alcinylamino (alkyle ou alcinyle en $C_1$ à $C_4$) ou morpholinyle, $R^4$ le reste méthylsulfonyle, chlorométhylsulfonyle ou méthoxycarbonyle et X de l'oxygène ou du soufre.

3. Le composé selon la revendication 1 de formule

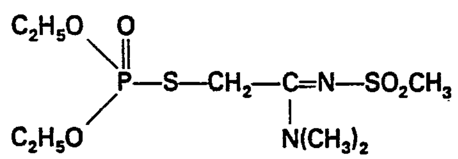

4. Le composé selon la revendication 1 de formule

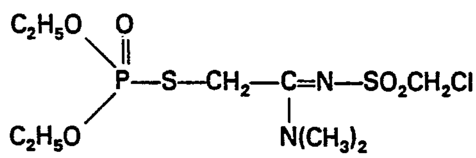

5. Le composé selon la revendication 1 de formule

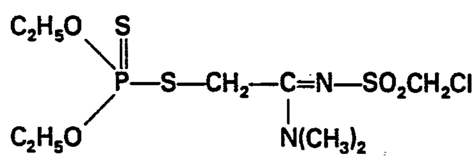

6. Le composé selon la revendication 1 de formule

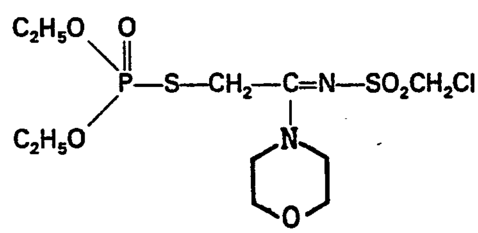

7. Procédé pour la préparation des esters d'acide phosphorique ou phosphonique de formule I selon la revendication 1, caractérisé par le fait que l'on fait réagir des composés de formule II

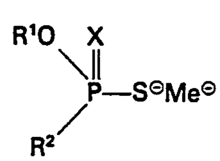

II,

dans laquelle $R^1$, $R^2$ et X ont les significations ci-dessus et Me est un équivalent cation minéral ou organique, avec des composés de formule III

$$Cl-CH_2-\underset{R^3}{\underset{|}{C}}=N-R^4 \qquad III,$$

dans laquelle $R^3$ et $R^4$ ont les significations ci-dessus, à des températures comprises entre 0 et 150°C en présence d'un diluant.

8. Pesticides contenant des supports solides et/ou liquides et des esters d'acide phosphorique ou phosphonique de formule I selon la revendication 1.

9. Procédé pour la lutte contre les parasites, caractérisé par le fait que l'on fait agir des esters d'acide phosphorique ou phosphonique de formule I selon la revendication 1 sur les parasites ou sur leur milieu de vie.